# EUROPEAN PATENT APPLICATION

(11) **EP 3 693 247 A1**
(43) Date of publication of application: **12.08.2020**
(21) Application number: 17933557.5
(22) Date of filing: 30.11.2017
(51) Int. Cl.: B62B 7/08

(54) **DOUBLE STROLLER**

(71) Applicant: Goodbaby Child Products Co., Ltd, Kunshan, Jiangsu 215331 (CN)
(72) Inventor: MA, Fusheng, Kunshan Jiangsu 215331 (CN); TANG, Ming, Kunshan Jiangsu 215331 (CN)
(74) Representative: De Vries & Metman
(86) International application number: PCT/CN2017/113906
(87) International publication number: WO 2019/104628

(57) **Abstract**

Disclosed is a double stroller, comprising: a front support (11), a front seat mechanism (4) being mounted on the front support (11); a rear support (12); an upper connecting rod (13), two components of an upper end portion of the front support (11), an upper end portion of the rear support (12) and a lower end portion of the upper connecting rod (13) are rotatably connected, and the third one thereof is rotatably connected with at least one of the two components thereof; an upper push rod (14), a lower portion thereof being rotatably connected with an upper end portion of the upper connecting rod (13); a lower push rod (15), an upper end portion thereof being rotatably connected with a lower end portion of the upper push rod (14), and a lower portion thereof being rotatably connected with the rear support (12); and, a connecting rod assembly consisting of a front connecting rod (18) rotatably connected with the front support (11), and a rear connecting rod (17) rotatably connected with the rear support (12), a rear end portion of the front connecting rod (18) and a front end portion of the rear connecting rod (17) are rotatably connected; the lower end portion of the lower push rod (15) is connected to the connecting rod assembly; the front seat mechanism (4) comprises a front seat rod (41) and a front seat rod connector (42), the front seat rod (41) is rotatably connected with the front support (11), the front seat rod connector (42) is rotatably connected with the front seat rod (41), and the front seat rod connector (42) is rotatably connected with the connecting rod assembly. The double stroller simplifies the folding operation process, and has a small folding volume.

## Description

### Technical Field of the Invention

The present disclosure relates to the field of children's products, and particularly relates to a double stroller.

### Background of the Invention

At present, there are a variety of structures of the double strollers. The common double stroller comprises a frame, a front wheel assembly and a rear wheel assembly mounted under the frame, and a seat mechanism connected to the frame. In order to facilitate the seating of two children, the seat mechanism usually comprises a front seat mechanism and a rear seat mechanism which are arranged on the frame one behind the other. Most of the existing double strollers have a large folded volume, and the folding operation is cumbersome, usually requiring multiple steps to achieve folding.

### Summary of the Invention

In view of the above problems, the present disclosure is aimed at providing a double stroller that simplifies the folding operation process and is convenient for folding.

To achieve the above purpose, the technical solution adopted by the present disclosure is as follows:
A double stroller, comprises a frame having an unfolded state and a folded state, a front wheel assembly, a rear wheel assembly, a front seat mechanism and a rear seat mechanism, and a lock mechanism for locking the frame in the unfolded state, the frame comprising two side supports respectively located on right and left sides;
each of the side supports comprises:
   a front support, the front wheel assembly is installed at a lower portion of the front support, the front seat mechanism is arranged on the front support, and the rear seat mechanism is arranged at a position on the frame behind the front seat mechanism;
   a rear support, the rear wheel assembly is installed at a lower portion of the rear support;
   an upper connecting rod, two components of an upper end portion of the front support, an upper end portion of the rear support and a lower end portion of the upper connecting rod are rotatably connected, and the third one thereof is rotatably connected with at least one of the two components thereof;
   an upper push rod, a lower portion of the upper push rod being rotatably connected with an upper end portion of the upper connecting rod via a first pivot;
   a lower push rod, an upper end portion of the lower push rod being rotatably connected with a lower end portion of the upper push rod via a second pivot, and a lower portion of the lower push rod being rotatably connected with the rear support via a third pivot; and
   a connecting rod assembly, connected between the front support and the rear support, the connecting rod assembly comprising a front connecting rod of which a front end portion is rotatably connected with the front support via a fourth pivot, and a rear connecting rod of which a rear end portion is rotatably connected with the rear support via a fifth pivot, a rear end portion of the front connecting rod and a front end portion of the rear connecting rod are rotatably connected via a sixth pivot; the lower end portion of the lower push rod is connected to the connecting rod assembly to drive the front connecting rod and the rear connecting rod to draw close to each other or stretch out from each other;
wherein the front seat mechanism comprises a front seat rod and a front seat rod connector, the front seat rod is rotatably connected with the front support via an eleventh pivot, an upper end portion of the front seat rod connector is rotatably connected with a rear end portion of the front seat rod via a twelfth pivot, and a lower end portion of the front seat rod connector is rotatably connected with the connecting rod assembly via a thirteenth pivot.

In some embodiments, the lower end portion of the front seat rod connector is rotatably connected with the front connecting rod via the thirteenth pivot, and the front support, the front seat rod, the front seat rod connector and the front connecting rod form a four-bar linkage; the lower end portion of the lower push rod is connected with the rear connecting rod via a push rod connector, and the rear support, the lower push rod, the push rod connector and the rear connecting rod form a four-bar linkage.

In some embodiments, an end portion of the push rod connector is rotatably connected with the rear connecting rod via a seventh pivot, and the other end portion thereof is rotatably connected with the lower end portion of the lower push rod via an eighth pivot, and the third pivot is located between the second pivot and the eighth pivot. Preferably, the seventh pivot is located in front of the eighth pivot. More preferably, when the frame is in the unfolded state, the center lines of the front connecting rod, the rear connecting rod and the push rod connector extend in a front-rear direction, respectively, and are parallel to one another, and the lower push rod, the rear connecting rod and the rear support form a triangle structure.

In some embodiments, the lower end portion of the lower push rod is rotatably and slidably connected to the rear connecting rod.

In some embodiments, when the frame is in the folded state, the rear end portion of the front connecting rod, the front end portion of the rear connecting rod, the lower end portion of the lower push rod, the upper end portion of the upper push rod and the upper end portion of the rear support are drawn close to one another; the lower end portion of the front support, the front end portion of the front connecting rod, the rear end portion of the rear connecting rod, the upper end portion of the upper connecting rod, the upper end portion of the lower push rod, the lower end portion of the upper push rod and the lower end portion of the rear support are drawn close to one another.

In some embodiments, the upper end portion of the rear support has a rear support connector, the front support is rotatably connected with a front portion of the rear support connector via a ninth pivot, and when the frame is in the unfolded state, a line connecting the fourth pivot and the ninth pivot of the same side support forms an angle less than 45 ° with a horizontal plane.

In some embodiments, the front support comprises a front portion aslant extending and an extension portion bending and extending rearward from the front portion, the front wheel assembly is arranged on the front portion, the extension portion is rotatably connected with the rear support connector via the ninth pivot, and when the frame is in the unfolded state, the extension portion extends along a front-rear direction of the frame; when the frame is in the folded state, the rear support connector is in a horizontal state.

In some embodiments, a space between the front wheel assemblies on the two sides is larger than a space between the rear wheel assemblies on the two sides, and when the frame is in the folded state, the rear wheel assemblies on the two sides are accepted between the front wheel assemblies on the two sides.

In some embodiments, axis lines of the first pivot, the second pivot, the third pivot, the fourth pivot, the fifth pivot, the sixth pivot, the eleventh pivot, the twelfth pivot and the thirteenth pivot are parallel to one another.

In some embodiments, the rear seat mechanism comprises a first rear seat rod, and a second rear seat rod connected to the first rear seat rod capable of sliding along a front-rear direction, the first rear seat rod is rotatably connected with the rear support via a tenth pivot, and the second rear seat rod is rotatably connected with the lower push rod via a fourteenth pivot. Preferably, the second rear seat rod is inserted into the first rear seat rod capable of sliding along the front-rear direction so as to be able to stretch out and draw out with the folding and unfolding of the frame.

Above all, due to adopt the above technical solutions, the present disclosure has the following advantages over the prior art:

the folding operation steps are simplified, after unlocking, pushing the upper push rod forward and downward to fold the side supports, and drawing back the front seat rods with the folding of the side supports to achieve the folding of the whole stroller, so the folding can be completed quickly and easily; the double stroller has a small folded size.

### Brief Description of the Drawings

For more clearly explaining the technical solutions in the embodiments of the present disclosure, the accompanying drawings used to describe the embodiments are simply introduced in the following. Apparently, the below described drawings merely show a part of the embodiments of the present disclosure, and those skilled in the art can obtain other drawings according to the accompanying drawings without creative work.
Figure 1 shows a side view of a double stroller in an unfolded state according to the present disclosure;
Figure 2 shows a space diagram of the double stroller in an unfolded state according to the present disclosure;
Figure 3 shows a side view of a double stroller during the folding process according to the present disclosure;
Figure 4 shows a space diagram of the double stroller during the folding process according to the present disclosure;
Figure 5 shows a side view of a double stroller in a folded state according to the present disclosure;
Figure 6 shows a space diagram of the double stroller in a folded state according to the present disclosure.

Wherein,
1 - side support; 11 - front support; 11a - front portion; 11b - extension portion; 12 - rear support; 120 - rear support connector; 13 - upper connecting rod;
130 - upper connecting rod connector; 14 - upper push rod; 15 - lower push rod;
16 - push rod connector; 17 - rear connecting rod; 18 - front connecting rod;
101 - first pivot; 102 -second pivot; 103 - third pivot; 104 - fourth pivot; 105-fifth pivot; 106 - sixth pivot; 107 - seventh pivot; 108 - eighth pivot; 109 - ninth pivot; 110 - tenth pivot; 111 - eleventh pivot; 112 - twelfth pivot; 113 - thirteenth pivot; 114 - fourteenth pivot;
2 - front wheel assembly;
3 - rear wheel assembly;
4 - front seat mechanism; 41 - front seat rod; 42 - front seat rod connector;
5 - rear seat mechanism; 51 - first rear seat rod; 52 - second rear seat rod;
6 - locking mechanism; 61 - locking member.

### Detailed Description of Exemplary Embodiments

In the following, the preferable embodiments of the present disclosure are explained in detail combining with the accompanying drawings so that the advantages and features of the present disclosure can be easily understood by the skilled persons in the art. It is should be noted that the explanation on these implementations is to help understanding of the present disclosure, and is not intended to limit the present disclosure. Further, the technical features involved in the various embodiments of the present disclosure described below may be combined with each other as long as they do not conflict with each other.

The orientation words mentioned herein are defined according to the conventional viewing angles of those skilled in the art on the orientation of the child dining chair in the unfolded state.

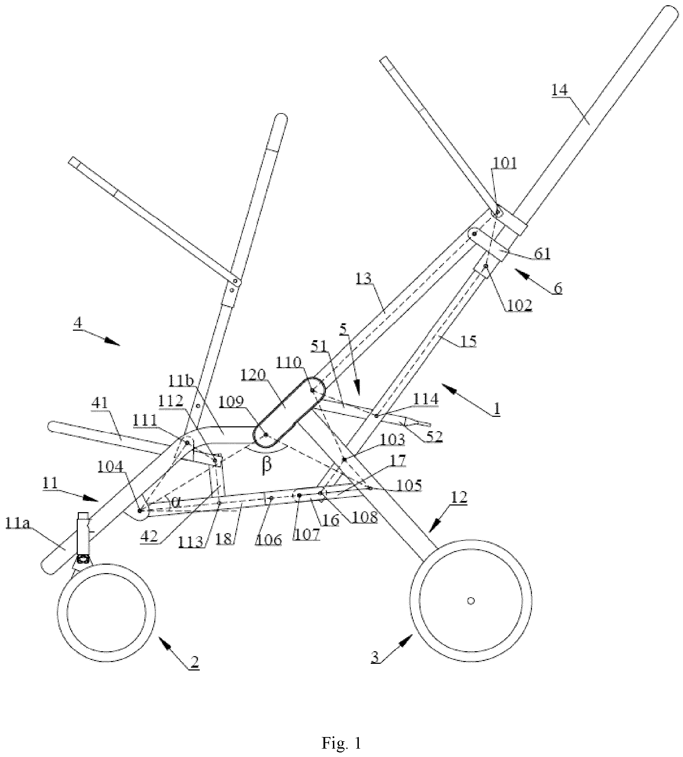

The present disclosure provides a double stroller, referring to Figures 1 - 6, it comprises a frame having an unfolded state and a folded state, a front wheel assembly 2, a rear wheel assembly 3, a front seat mechanism 4 and a rear seat mechanism 5 that are provided one after the other, and a lock mechanism 6 for locking the frame in the unfolded state. The frame comprises two side supports 1 respectively located on right and left sides. Each side support 1 comprises a front support 11, a rear support 12, an upper connecting rod 13, an upper push rod 14, a lower push rod 15 and a connecting rod assembly. The following describes the respective components of each side support 1, one by one.

At a lower portion of the front support 11 is mounted the front wheel assembly 2, the front seat mechanism 4 is arranged on the front support 11, and the rear seat mechanism 5 is arranged at a position on the frame behind the front seat mechanism 4. Specifically, in the present embodiment, the front support 11 comprises a front portion 11a aslant extending and an extension portion 11b bending and extending rearward from the front portion 11a, and the front wheel assembly 2 is specifically arranged on the front portion 11a. The extension portion 11b extends along a front-rear direction of the frame that is to say, the extension portion 11b is substantially horizontally arranged when the frame is in the unfolded state. The front seat mechanism 4 is specifically arranged on the front portion 11a of the front support 11.

At a lower portion of the rear support 12 is mounted the rear wheel assembly 3. In the present embodiment, a space between the rear wheel assemblies 3 on the two sides is less than a space between the front wheel assemblies 2 on the two sides, thus when the frame is folded, the rear wheel assemblies 3 on the two sides can be accepted between the front wheel assemblies 2 on the two sides, and the folded size is reduced. Therefore, in a preferred embodiment, the lower end portion of the rear support 12 bends and extends towards the side support 1 on the other side (inwards), so that a space between the lower end portions of the rear supports 12 on the left and right sides of the frame is less than a space between the upper end portions thereof.

Two components of an upper end portion of the front support 11, an upper end portion of the rear support 12 and a lower end portion of the upper connecting rod 13 are rotatably connected, and the third one thereof is rotatably connected with at least one of the two components thereof. That is to say, the upper end portion of the front support 11, the upper end portion of the rear support 12 and the lower end portion of the upper connecting rod 13 are coaxially and rotatably connected, or any two components thereof are rotatably connected; for example, two components of the upper end portion of the front support 11, the upper end portion of the rear support 12 and the lower end portion of the upper connecting rod 13 are rotatably connected via a pivot, and the third one thereof is rotatably connected with one of the two components thereof via another pivot, such as an arrangement shown in Figures 1 - 6. Specifically, in the present embodiment, the upper end portion of the rear support 12 is formed with a rear support connector 120, which is fixedly connected or integrally formed with other parts of the rear support 12; the extension portion 11b of the front support 11 is rotatably connected with a front portion of the rear support connector 120 via a ninth pivot 109, and the upper connecting rod 13 is rotatably connected with a rear portion of the rear support connector 120 via a tenth pivot 110.

A lower portion of the upper push rod 14 is rotatably connected with an upper end portion of the upper connecting rod 13 via a first pivot 101.

An upper end portion of the lower push rod 15 is rotatably connected with a lower end portion of the upper push rod 14 via a second pivot 102, the second pivot 102 is located below the first pivot 101, and a lower portion of the lower push rod 15 is rotatably connected with the rear support 12 via a third pivot 103.

The connecting rod assembly is connected betweent the front support 11 and the rear support 12 capbale of stretching out or drawing back with respect to each other. The connecting rod assembly comprises a front connecting rod 18 of which a front end portion is rotatably connected with the front portion 11a of the front support 11 via a fourth pivot 104, and a rear connecting rod 17 of which a rear end portion is rotatably connected with the rear support 12 via a fifth pivot 105, a rear end portion of the front connecting rod 18 and a front end portion of the rear connecting rod 17 are rotatably connected via a sixth pivot 106. The third pivot 103 on the rear support 12 is located between the tenth pivot 110 and the fifth pivot 105. The lower end portion of the lower push rod 15 is connected to the connecting rod assembly to drive the front connecting rod 18 and the rear connecting rod 17 to draw close to each other or stretch out from each other, and the connection joint is below the third pivot 103.

Specifically, in the present embodiment, the lower end portion of the lower push rod 15 is connected with the connecting rod assembly via a push rod connector 16, one end portion of the push rod connector 16 is rotatably connected with the connecting rod assembly via a seventh pivot 107, and the other end portion thereof is rotatably connected with the lower end portion of the lower push rod 15 via an eighth pivot 108. The third pivot 103 on the lower push rod 15 is located between the second pivot 102 and the eighth pivot 108. Specifically, as shown in Figure 1, the one end portion of the push rod connector 16 is rotatably connected with the rear connecting rod 17 via the seventh pivot 107, and the seventh pivot 107 is located in front of the eighth pivot 108. That is, a four-bar linkage forming by the lower push rod 15, the push rod connector 16, the rear connecting rod 17 and the rear support 12 drives the connecting rod assembly to stretch out or draw back with respect to one another, and the front support 11 and the rear support 12 are stretched out or drawn back with respect to each other accordingly.

For the connection type of the lower push rod 15 and the connecting rod assembly, in an alternative implementation, the lower end portion of the lower push rod 15 is rotatably and slidably connected to the rear connecting rod 17. For example, the lower end portion of the lower push rod 15 is rotatably and slidably connected to the rear connecting rod 17 via a sliding sleeve, the sliding sleeve is arranged on the rear connecting rod 17 capable of sliding along the extension direction of the rear connecting rod 17, and the sliding sleeve is rotatably connected with the lower end portion of the lower push rod 15, and thus a crank slider mechanism is formed to replace the four-bar linkage. When being folded, the lower push rod 15 is turned over and drives the sliding sleeve to move, and under the action of the sliding sleeve, the rear connecting rod 17 is turned over and drawn close to the front connecting rod 18.

It should also be noted that, the lower push rod 15 and the push rod connector 16 connected between the rear connecting rod 17 and the rear support 12 further have the function of stabilizing the frame. In a preferred implementation, when the frame is in the unfolded state, the center lines of the front connecting rod 18, the rear connecting rod 17 and the push rod connector 16 extend in a front-rear direction, respectively, and are parallel to one another. That is to say, when the frame is unfolded, the push rod connector 16 and the rear connecting rod 17 are overlapped, so that the lower push rod 15, the rear connecting rod 17 and the rear support 12 form a triangle structure, strengthening the stability of the frame in the unfolded state, and facilitating the frame to be in the unfolded state.

As shown in Figure 1, when the frame is in the unfolded state, on the same side support 1, an angle α is formed between a line connecting the fourth pivot 104 and the ninth pivot 109 and a horizontal plane, an angle β is formed between the line connecting the fourth pivot 104 and the ninth pivot 109 and a line connecting the ninth pivot 109 and the fifth pivot 105, the angle α is less than 45 °, and the angle β is greater than 90 °, so that the front support 11 and the rear support 12 have a relative large sizes in the front-rear direction, and thus an enough space is provided for the front seat mechanism 4 and the rear seat mechanism 5.

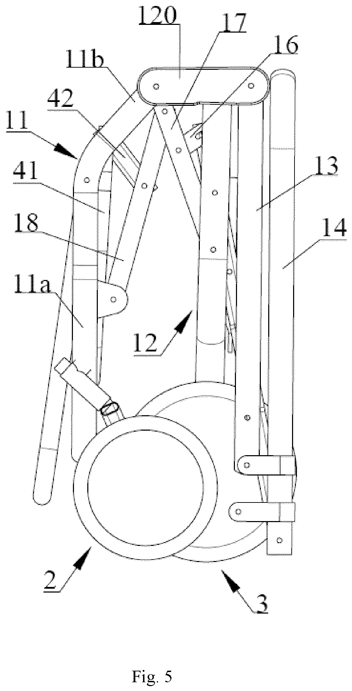

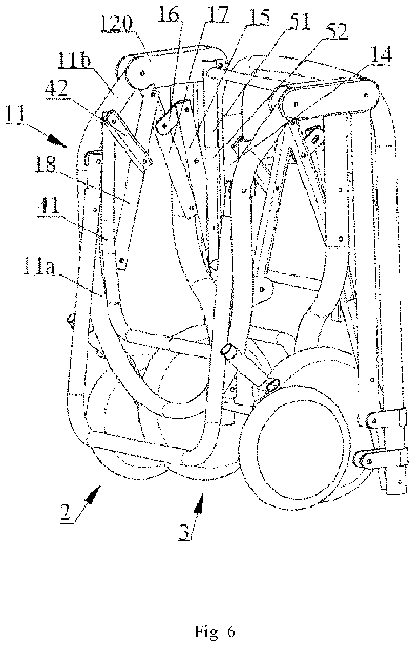

As shown in Figures 5 and 6, when the frame is in the folded state, the rear support connector 120 is in a horizontal state, the upper end portion of the upper push rod 14 and the rear support connector 120 are substantially in the same line, and the rear end portion of the front connecting rod 18, the front end portion of the rear connecting rod 17, the lower end portion of the lower push rod 15 and the rear support connector 120 are drawn close to one another; the front portion 11a of the front support 11 is in an upright state, the upper connecting rod 13, the upper push rod 14 and the lower push rod 15 are substantially drawn close uprightly behind the rear support 12; the rear wheel assemblies 3 of the two sides are accepted between the front wheel assemblies 2 of the two sides; the upper end portion of the upper connecting rod 13, the upper end portion of the lower push rod 15, the lower end portion of the lower push rod 15 and the rear wheel assembly 3 are drawn close to one another.

It should be specifically noted that, the front seat mechanism 4 in the present disclosure can be folded and drawn back along with the side support 1, simplifying the folding steps. Wherein, the front seat mechanism comprises a front seat rod 41, the front seat rod 41 is rotatably connected with the front support 11 via an eleventh pivot 111, and a rear end portion of the front seat rod 41 is connected with the connecting rod assembly to be driven to rotate by the connecting rod assembly. Specifically, the front seat mechanism 4 further comprises a front seat rod connector 42, an upper end portion of the front seat rod connector 42 is rotatably connected with a rear end portion of the front seat rod 41 via a twelfth pivot 112, and a lower end portion of the front seat rod connector 42 is rotatably connected with the front connecting rod 18 via a thirteenth pivot 113, forming a four-bar linkage. On the same side of the frame, the fourth pivot 104, the thirteen pivot 113, the sixth pivot 106, the seventh pivot 107, the eighth pivot 108 and the fifth pivot 105 are spaced successively in a direction parallel to the center lines of the front connecting rod 18 and the rear connecting rod 17. The eleventh pivot 111 on the front support 11 is located between the ninth pivot 109 and the fourth pivot 104.

The rear seat mechanism 5 comprises a first rear seat rod 51, and a second rear seat rod 52 connected to the first rear seat rod 51 capable of sliding along a front-rear direction, the first rear seat rod 51 is rotatably connected with the rear support 12 via a tenth pivot 110, and the second rear seat rod 52 is rotatably connected with the lower push rod 15 via a fourteenth pivot 114. Specifically, the second rear seat rod 52 is inserted into the first rear seat rod 51 capable of sliding along the front-rear direction, and when the frame is in the folded state, the length of the second rear seat rod 52 sliding out of the second rear seat rod 52 is increased. When the frame is in the process of folding and unfolding, the first rear seat rod 51 and the second rear seat rod 52 are stretched out and drawn out with respect to each other.

In the present embodiment, the locking mechanism 6 is arranged between the upper end portion of the upper connecting rod 13 and the lower end portion of the upper push rod 14. The locking mechanism 6 specifically comprises a locking member 61 arranged on the lower end portion of the upper push rod 14, and the locking member 61 is detachably connected with the upper end portion of the upper connecting rod 13. When the locking member 61 is disengaged from the upper connecting rod 13, the locking mechanism 6 is unlocked, and the frame can be folded; when the locking member 61 is connected to the upper connecting rod 13, the locking mechanism 6 locks the frame in the unfolded state.

The lower end portions of the front supports 11 of the two side supports 1 are directly connected and form a U-shaped structure; the lower end portions of the rear supports 12 of the two side supports 1 are connected via a transverse rod assembly; the upper end potions of the upper push rods 14 of the two side supports 1 are directly connected or connected via an intermediate component to form a half-frame shaped structure. The front end portions of the two front seat rods 41 of the front seat mechanism 4 respectively arranged on the front supports 11 on the two sides are directly connected or connected via an intermediate component to form a half-frame shaped structure. The front end portions of the two first rear seat rods 51 of the rear seat mechanism 5 respectively arranged on the rear supports 12 on the two sides are directly connected or connected via an intermediate component to form a half-frame shaped structure, and the rear end portions of the two second rear seat rods 52 of the rear seat mechanism 5 respectively arranged on the lower push rods 15 on the two sides are directly connected or connected via an intermediate component to form a half-frame shaped structure.

The respective axis lines of the first pivot 101, the second pivot 102, the third pivot 103, the fourth pivot 104, the fifth pivot 105, the sixth pivot 106, the eleventh pivot 107, the twelfth pivot 108, the thirteenth pivot 109, the tenth pivot 110, the eleventh pivot 111, the twelfth pivot 112, the thirteenth pivot 113 and the fourteenth pivot 114 of each side support 1 are parallel to one another and horizontally extend along the left-right direction of the frame, respectively. The axis lines of the corresponding pivots of the two side supports 1 are preferably overlapped with each other, for example, the axis lines of the first pivots 101 of the two sides are overlapped with each other; the axis lines of the second pivots 102 of the two sides are overlapped with each other, and so on. This further reduces the folded size of the double stroller.

The folding principle of the double stroller mentioned above is as follows:

In each side support 1, the upper push rod 14, the lower push rod 15, the rear support 12 and the upper connecting rod 13 form a first four-bar linkage between the first pivot 101, the second pivot 102, the third pivot 103, and the tenth pivot 110; the rear support 12 and the lower push rod 15 form a connecting rod sliding sleeve mechanism between the tenth pivot 110, the third pivot 103, the fifth pivot 105, the first rear seat rod 51 and the second rear seat rod 52; the front support 11, the rear support 12, the rear connecting rod 17 and the front connecting rod 18 form a second four-bar linkage between the ninth pivot 109, the fifth pivot 105, the sixth pivot 106, and the fourth pivot 104; the rear support 12, the rear connecting rod 17, the push rod connector 16 and the lower push rod 15 form a third four-bar linkage between the third pivot 103, the fifth pivot 105, the seventh pivot 107, and the eighth pivot 108; the front support 11, the front seat rod 31, the front seat rod connector 42 and the front connecting rod 18 form a fourth four-bar linkage between the eleventh pivot 111, the twelfth pivot 112, the thirteenth pivot 113, and the fourth pivot 104; when folding, unlocking the upper connecting rod 13 and the upper push rod 14, pushing the upper push rod 14 forward and downward so as to fold the first four-bar linkage and drive the second four-bar linkage to fold, and at the same time, the length of the second rear seat rod 52 protruding from the first rear seat rod 51 is increased, and the third four-bar linkage and the fourth four-bar linkage are folded along with it.

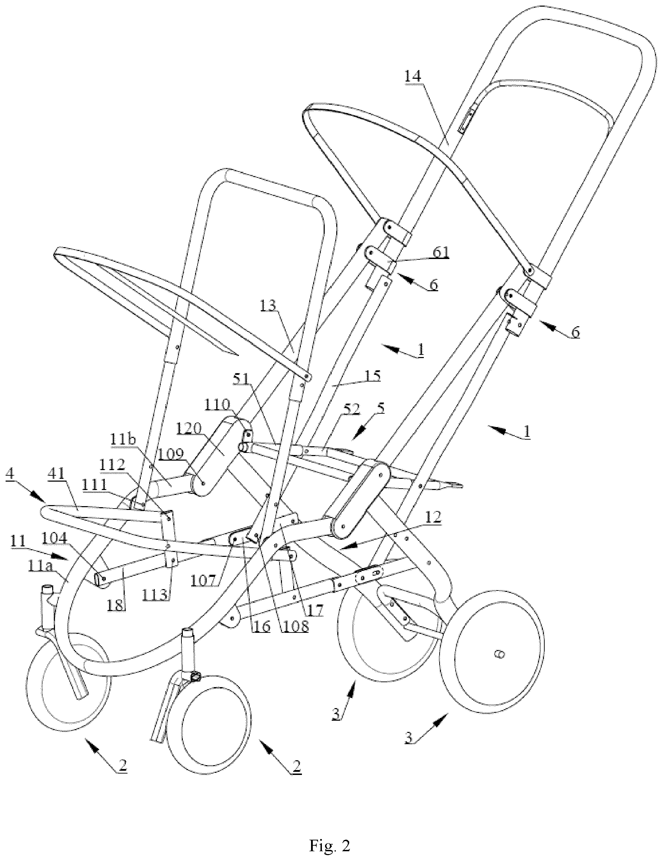

As shown in Figures 1 and 2, when the frame is in the unfolded state, the locking mechanism 6 locks the upper connecting rod 13 and the upper push rod 14, the extension portion 11b of the front support 11 is substantially horizontal, the center line of the front connecting rod 18, the center line of the rear connecting rod 17 and the center line of the push rod connector 16 respectively extend in the front-rear direction and are parallel to one another, and the fourth pivot 104, the thirteen pivot 113, the sixth pivot 106, the seventh pivot 107, the eighth pivot 108 and the fifth pivot 105 on the same side of the frame are spaced successively in a direction parallel to the center lines of the front connecting rod 18 and the rear connecting rod 17.

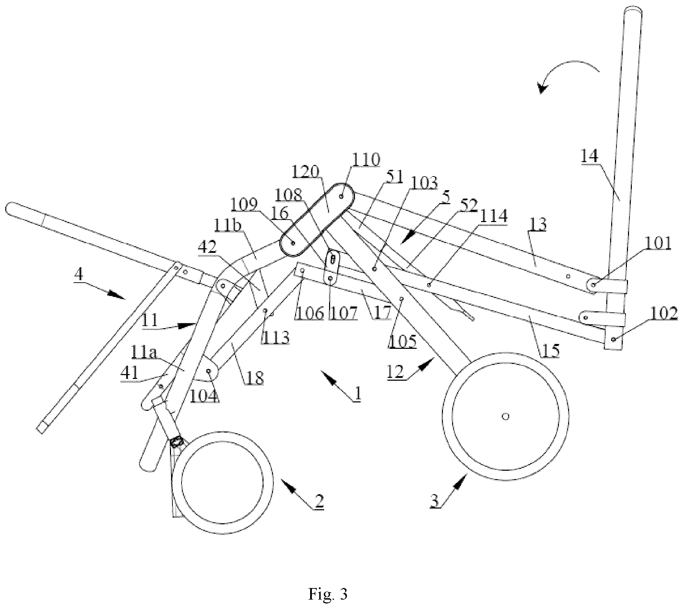

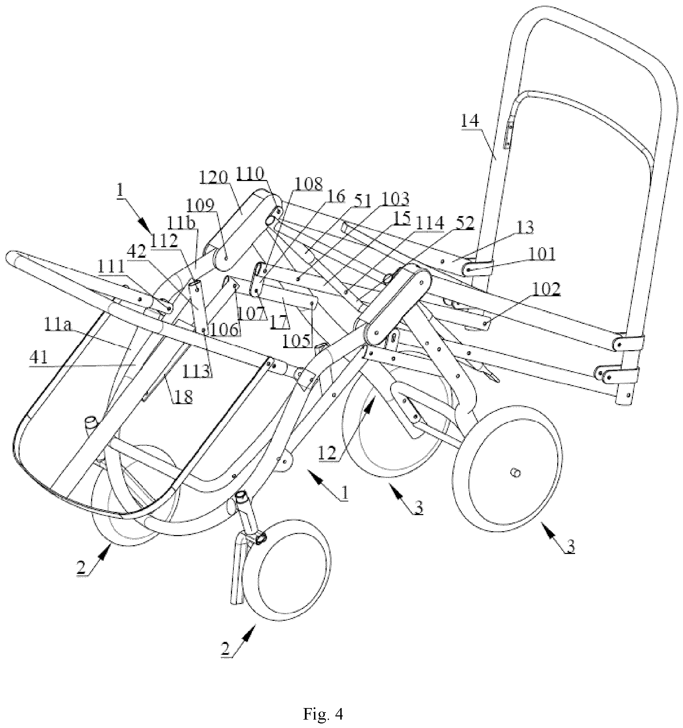

As shown in Figures 3 and 4, the folding process of the double stroller is as follows:
Unlocking the locking mechanism 6; along a direction indicated by an arrow shown in Figure 3, pushing the upper push rod 14 froward and downward, so as to turn the lower push rod 15 over around the third pivot 103; with the lower end portion of the upper push rod 14 being turned over upward around the third pivot 103, the push rod connector 16 is first driven to turn over around the seventh pivot 107, then the rear connecting rod 17 is driven to turn over upward around the fifth pivot 105 driven by the push rod connector 16, so that the rear end portion of the front connecting rod 18 and the front end portion of the rear connecting rod 17 are drawn close toward the rear support connector 120, and the front end portion of the front connecting rod 18 and the rear end portion of the rear connecting rod 17 are drawn close to each other therewith, so as to drive the front support 11 and the rear support 12 to draw close to each other and the front wheel assembly 2 and the rear wheel assembly 3 to draw close to each other; at the same time, with the front end portion of the front connecting rod 18 and the rear end portion of the rear connecting rod 17 are drawn close to each other, the front support 11 and the front connecting rod 18 are drawn close to each other, and thus the front seat rod 41 and the front seat rod connector 42 are drawn close to each other so that the rear end portion of the front seat rod 41 is drawn close to the rear support connector 120, and the front seat rod 41 is turned over around the eleventh pivot 111 to get close to the front support 11; with the lower push rod 15 is turned over around the third pivot 103, the second rear seat rod 52 is stretched out so that the length sliding out of the first rear seat rod 51 is increased.

As shown in Figures 5 and 6, when the frame is in the folded state, the rear support connector 120 is in a substantially horizontal state, and the rear end portion of the front seat rod 41, the rear end portion of the front connecting rod 18, the front end portion of the rear connecting rod 17, the rear end portion of the push rod connector 16, the lower end portion of the lower push rod 15, the upper end portion of the upper push rod 14 and the rear support connector 120 are drawn close to one another, wherein the upper end portion of the upper push rod 14 and the rear support connector 120 are substantially in the same line; the lower end portion of the front support 11 and the lower end portion of the rear support 12 are drawn close to each other so that the front wheel assembly 2 and the rear wheel assembly 3 are drawn close to each other, and the rear wheel assemblies 3 of the two sides are accepted between the front wheel assemblies 2 of the two sides, the front end portion of the front seat rod 41, the front end portion of the front connecting rod 18, the rear end portion of the rear connecting rod 17, the lower end portion of the upper push rod 14, the upper end portion of the upper connecting rod 13, the upper end portion of the lower push rod 15 and the front wheel assembly 2 and the rear wheel assembly 3 are drawn close to one another, wherein the front wheel assembly 2 and the rear wheel assembly 3 can touch the ground; the front portion 11a of the front support 11, the upper connecting rod 13 and the upper push rod 14 are in a substantially upright state.

It can be seen from the above description that, on the one hand, the folding operation steps of the double stroller according to the present disclosure are simplified, by pushing the upper push rod 14 forward and downward after unlocking can fold the side supports and the front seat mechanism, achieving the folding of the whole stroller, so the folding can be completed quickly; on the other hand, the double stroller according to the present disclosure has a small folded size. Furthermore, the double stroller according to the present disclosure has a good robustness in the unfolded state.

The embodiments described above are only for illustrating the technical concepts and features of the present disclosure, and are intended to make those skilled in the art being able to understand the present disclosure and thereby implement it, and should not be concluded to limit the protective scope of this disclosure.

## Claims

1. A double stroller, comprising a frame having an unfolded state and a folded state, a front wheel assembly, a rear wheel assembly, a front seat mechanism and a rear seat mechanism, and a lock mechanism for locking the frame in the unfolded state, the frame comprising two side supports respectively located on right and left sides;
wherein, each of the side supports comprises:
a front support, the front wheel assembly is installed at a lower portion of the front support , the front seat mechanism is arranged on the front support, and the rear seat mechanism is arranged at a position on the frame behind the front seat mechanism;
a rear support, the rear wheel assembly is installed at a lower portion of the rear support;
an upper connecting rod, two components of an upper end portion of the front support, an upper end portion of the rear support and a lower end portion of the upper connecting rod are rotatably connected, and the third one thereof is rotatably connected withat least one of the two components thereof;
an upper push rod, a lower portion of the upper push rod being rotatably connected with an upper end portion of the upper connecting rod via a first pivot;
a lower push rod, an upper end portion of the lower push rod being rotatably connected with a lower end portion of the upper push rod via a second pivot, and a lower portion of the lower push rod being rotatably connected with the rear support via a third pivot; and
a connecting rod assembly, connected between the front support and the rear support, the connecting rod assembly comprising a front connecting rod of which a front end portion is rotatably connected with the front support via a fourth pivot, and a rear connecting rod of which a rear end portion is rotatably connected with the rear support via a fifth pivot, a rear end portion of the front connecting rod and a front end portion of the rear connecting rod are rotatably connected via a sixth pivot; the lower end portion of the lower push rod is connected to the connecting rod assembly to drive the front connecting rod and the rear connecting rod to draw close to each other or stretch out from each other;
wherein the front seat mechanism comprises a front seat rod and a front seat rod connector, the front seat rod is rotatably connected with the front support via an eleventh pivot, an upper end portion of the front seat rod connector is rotatably connected with a rear end portion of the front seat rod via a twelfth pivot, and a lower end portion of the front seat rod connector is rotatably connected with the connecting rod assembly via a thirteenth pivot.

2. The double stroller according to claim 1, wherein the lower end portion of the front seat rod connector is rotatably connected with the front connecting rod via the thirteenth pivot, and the front support, the front seat rod, the front seat rod connector and the front connecting rod form a four-bar linkage; the lower end portion of the lower push rod is connected with the rear connecting rod via a push rod connector, and the rear support, the lower push rod, the push rod connector and the rear connecting rod form a four-bar linkage.

3. The double stroller according to claim 2, wherein one end portion of the push rod connector is rotatably connected with the rear connecting rod via a seventh pivot, and the other end portion of the push rod connector is rotatably connected with the lower end portion of the lower push rod via an eighth pivot, and the third pivot is located between the second pivot and the eighth pivot.

4. The double stroller according to claim 1, wherein the lower end portion of the lower push rod is rotatably and slidably connected to the rear connecting rod.

5. The double stroller according to claim 1, wherein when the frame is in the folded state, the rear end portion of the front connecting rod, the front end portion of the rear connecting rod, the lower end portion of the lower push rod, the upper end portion of the upper push rod and the upper end portion of the rear support are drawn close to one another; the lower end portion of the front support, the front end portion of the front connecting rod, the rear end portion of the rear connecting rod, the upper end portion of the upper connecting rod, the upper end portion of the lower push rod, the lower end portion of the upper push rod and the lower end portion of the rear support are drawn close to one another.

6. The double stroller according to claim 1, wherein the upper end portion of the rear support has a rear support connector, the front support is rotatably connected with a front portion of the rear support connector via a ninth pivot, and when the frame is in the unfolded state, a line connecting the fourth pivot and the ninth pivot of the same side support forms an angle less than 45 ° with a horizontal plane.

7. The double stroller according to claim 6, wherein the front support comprises a front portion aslant extending and an extension portion bending and extending rearward from the front portion, the front wheel assembly is arranged on the front portion, the extension portion is rotatably connected with the rear support connector via the ninth pivot, and when the frame is in the unfolded state, the extension portion extends along a front-rear direction of the frame; when the frame is in the folded state, the rear support connector is in a horizontal state.

8. The double stroller according to claim 1, wherein a space between the front wheel assemblies on the two sides is larger than a space between the rear wheel assemblies on the two sides, and when the frame is in the folded state, the rear wheel assemblies on the two sides are accepted between the front wheel assemblies on the two sides.

9. The double stroller according to claim 1, wherein axis lines of the first pivot, the second pivot, the third pivot, the fourth pivot, the fifth pivot, the sixth pivot, the eleventh pivot, the twelfth pivot and the thirteenth pivot are parallel to one another.

10. The double stroller according to claim 1, wherein the rear seat mechanism comprises a first rear seat rod, and a second rear seat rod connected to the first rear seat rod capable of sliding along a front-rear direction, the first rear seat rod is rotatably connected with the rear support via a tenth pivot, and the second rear seat rod is rotatably connected with the lower push rod via a fourteenth pivot.
